# EUROPEAN PATENT APPLICATION

(11) **EP 2 940 884 A1**
(43) Date of publication of application: **04.11.2015**
(21) Application number: 12890984.3
(22) Date of filing: 31.12.2012
(51) Int. Cl.: H04B 7/02, H04W 48/20, H04W 72/08

(54) **METHOD AND DEVICE FOR DETERMINING COMP USER**

(71) Applicant: Huawei Technologies Co., Ltd., Longgang District Shenzhen, Guangdong 518129 (CN)
(72) Inventor: XU, Shifang, Shenzhen Guangdong 518129 (CN)
(74) Representative: Epping - Hermann - Fischer
(86) International application number: PCT/CN2012/088060
(87) International publication number: WO 2014/101191

(57) **Abstract**

Embodiments of the present invention relate to the field of communications, and provide a CoMP user determining method and device to ensure that a base station can determine a UE as a CoMP user even when the UE cannot measure a downlink reference signal power value of a neighboring cell. The method includes: determining, by the base station, whether a first downlink reference signal power value of a neighboring cell adjacent to a serving cell of a UE is acquired; when the first downlink reference signal power value is not acquired, acquiring a first uplink reference signal power value of the neighboring cell adjacent to the serving cell of the UE and a second uplink reference signal power value of the serving cell; determining a first coordinated base station according to the first uplink reference signal power value and the second uplink reference signal power value; and when the first coordinated base station includes a base station to which the neighboring cell belongs, determining that the UE is a CoMP user. The embodiments of the present invention are used to determine a CoMP user.

## Description

### TECHNICAL FIELD

The present invention relates to the field of communications, and in particular, to a CoMP user determining method and device.

### BACKGROUND

CoMP (Coordinated Multi-Point, coordinated multi-point) improves system performance by means of coordination between coordinated base stations, such as cooperative transmission and scheduling. In the prior art, a base station may determine a UE (User Equipment, user equipment) as a CoMP user by using a downlink RSRP (Reference Signal Receive Power, reference signal receive power) measured and reported by the UE.

However, a UE has a limited capability of measuring a downlink RSRP (for example, when the UE is at a far distance from a neighboring cell or the neighboring cell transmits a downlink reference signal at a relatively low transmit power). When the UE cannot measure a downlink RSRP of the neighboring cell, the base station cannot determine whether the UE is a CoMP user, thereby affecting system performance.

### SUMMARY

Embodiments of the present invention provide a CoMP user determining method and device, to ensure that a base station can determine a UE as a CoMP user even when the UE cannot measure a downlink reference signal power value of a neighboring cell.

According to a first aspect, a CoMP user determining method is provided, including:
determining, by a base station, whether a first downlink reference signal power value of a neighboring cell adjacent to a serving cell of a user equipment UE is acquired;
when the first downlink reference signal power value is not acquired, acquiring a first uplink reference signal power value of the neighboring cell adjacent to the serving cell of the UE and a second uplink reference signal power value of the serving cell;
determining a first coordinated base station according to the first uplink reference signal power value and the second uplink reference signal power value; and
when the first coordinated base station includes a base station to which the neighboring cell belongs, determining that the UE is a CoMP user.

In a first possible implementation of the first aspect, the method further includes: when the first downlink reference signal power value is acquired, acquiring, by the base station, a second downlink reference signal power value of the serving cell of the UE;
determining a second coordinated base station according to the first downlink reference signal power value and the second downlink reference signal power value; and
when the second coordinated base station includes the base station to which the neighboring cell belongs, determining that the UE is a CoMP user.

With reference to the first aspect or the first possible implementation of the first aspect, in a second possible implementation, the determining a first coordinated base station according to the first uplink reference signal power value and the second uplink reference signal power value includes:
deriving, from a difference between the first uplink reference signal power value and the second uplink reference signal power value, a difference between a second uplink path loss value in the direction of from the UE to the serving cell and a first uplink path loss value in the direction of from the UE to the neighboring cell; and
determining the first coordinated base station according to the difference between the second uplink path loss value and the first uplink path loss value.

With reference to the second possible implementation, in a third possible implementation, the determining the first coordinated base station according to the difference between the second uplink path loss value and the first uplink path loss value includes:
when the difference between the second uplink path loss value and the first uplink path loss value is greater than or equal to a preset threshold, determining that the base station to which the neighboring cell belongs is the first coordinated base station.

With reference to any one of the first aspect to the third possible implementation of the first aspect, in a fourth possible implementation, before the acquiring a first uplink reference signal power value of the neighboring cell of the UE and a second uplink reference signal power value of the serving cell of the UE, the method further includes:
receiving an uplink reference signal; where
the acquiring a first uplink reference signal power value of the neighboring cell of the UE and a second uplink reference signal power value of the serving cell of the UE includes:
   measuring, in the serving cell, a receive power of the uplink reference signal of the UE to obtain the second uplink reference signal power value, and acquiring a receive power that is of the uplink reference signal of the UE and that is measured in the neighboring cell by the base station to which the neighboring cell belongs, to obtain the first uplink reference signal power value.

With reference to the fourth possible implementation, in a fifth possible implementation, before the receiving the uplink reference signal, the method further includes:
determining a to-be-measured neighboring cell according to information about a distance between the UE and a base station to which a neighboring cell belongs.

According to a second aspect, a base station is provided, including:
a determining unit, configured to determine whether a first downlink reference signal power value of a neighboring cell adjacent to a serving cell of a UE is acquired;
an acquiring unit, configured to: when the determining unit determines that the first downlink reference signal power value is not acquired, acquire a first uplink reference signal power value of the neighboring cell adjacent to the serving cell of the UE and a second uplink reference signal power value of the serving cell; and
a processing unit, configured to determine a first coordinated base station according to the first uplink reference signal power value and the second uplink reference signal power value that are acquired by the acquiring unit, and when the first coordinated base station includes a base station to which the neighboring cell belongs, determine that the UE is a CoMP user.

In a first possible implementation of the second aspect, the acquiring unit is further configured to: when the determining unit determines that the first downlink reference signal power value of the neighboring cell of the UE is acquired, acquire a second downlink reference signal power value of the serving cell of the UE; and
the processing unit is further configured to: determine a second coordinated base station according to the first downlink reference signal power value and the second downlink reference signal power value that are acquired by the acquiring unit, and when the second coordinated base station includes a base station to which the neighboring cell belongs, determine that the UE is a CoMP user.

With reference to the second aspect or the first possible implementation of the second aspect, in a second possible implementation, the processing unit is specifically configured to: derive, from a difference between the first uplink reference signal power value and the second uplink reference signal power value, a difference between a second uplink path loss value in the direction of from the UE to the serving cell and a first uplink path loss value in the direction of from the UE to the neighboring cell; and
determine the first coordinated base station according to the difference between the second uplink path loss value and the first uplink path loss value.

With reference to the second possible implementation, in a third possible implementation, the processing unit is specifically configured to: when the difference between the second uplink path loss value and the first uplink path loss value is greater than or equal to a preset threshold, determine that the base station to which the neighboring cell belongs is the first coordinated base station.

With reference to any one of the second aspect to the third possible implementation of the second aspect, in a fourth possible implementation, the base station further includes: a receiving unit, configured to: before the first uplink reference signal power value of the neighboring cell of the UE and the second uplink reference signal power value of the serving cell are acquired, receive an uplink reference signal; and
the processing unit is specifically configured to: measure, in the serving cell, a receive power of the uplink reference signal of the UE to obtain the second uplink reference signal power value, and acquire a receive power that is of the uplink reference signal of the UE and that is measured in the neighboring cell by the base station to which the neighboring cell belongs, to obtain the first uplink reference signal power value.

With reference to the fourth possible implementation, in a fifth possible implementation, the determining unit is further configured to: before the receiving unit receives the uplink reference signal, determine a to-be-measured neighboring cell according to information about a distance between the UE and a base station to which a neighboring cell belongs.

According to a third aspect, a base station is provided, including: a processor and a memory, where the memory stores a computer-executable instruction, and the processor and the memory are connected by using a communications bus; and
when the base station operates, the processor executes the computer-executable instruction stored in the memory, and is configured to: determine whether a first downlink reference signal power value of a neighboring cell adjacent to a serving cell of a UE is acquired; when it is determined that the first downlink reference signal power value is not acquired, acquire a first uplink reference signal power value of the neighboring cell adjacent to the serving cell of the UE and a second uplink reference signal power value of the serving cell; determine a first coordinated base station according to the first uplink reference signal power value and the second uplink reference signal power value that are acquired; and when the first coordinated base station includes a base station to which the neighboring cell belongs, determine that the UE is a CoMP user.

In a first possible implementation of the third aspect, the processor is specifically configured to: when it is determined that the first downlink reference signal power value of the neighboring cell of the UE is acquired, acquire a second downlink reference signal power value of the serving cell of the UE, determine a second coordinated base station according to the first downlink reference signal power value and the second downlink reference signal power value, and when the second coordinated base station includes the base station to which the neighboring cell belongs, determine that the UE is a CoMP user.

With reference to the third aspect or the first possible implementation of the third aspect, in a second possible implementation, the processor is specifically configured to: derive, from a difference between the first uplink reference signal power value and the second uplink reference signal power value, a difference between a second uplink path loss value in the direction of from the UE to the serving cell and a first uplink path loss value in the direction of from the UE to the neighboring cell, and determine the first coordinated base station according to the difference between the second uplink path loss value and the first uplink path loss value.

With reference to the second possible implementation, in a third possible implementation, the processor is specifically configured to: when the difference between the second uplink path loss value and the first uplink path loss value is greater than or equal to a preset threshold, determine that the base station to which the neighboring cell belongs is the first coordinated base station.

With reference to any one of the third aspect to the third possible implementation of the third aspect, in a fourth possible implementation, the base station further includes a transceiver, and the transceiver and the processor are connected by the communications bus; and the transceiver is configured to: before the first uplink reference signal power value of the neighboring cell of the UE and the second uplink reference signal power value of the serving cell are acquired, receive an uplink reference signal; and
the processor is specifically configured to: measure, in the serving cell, a receive power of the uplink reference signal that is of the UE and received by the transceiver, to obtain the second uplink reference signal power value, and acquire a receive power that is of the uplink reference signal of the UE and that is measured in the neighboring cell by the base station to which the neighboring cell belongs, to obtain the first uplink reference signal power value.

With reference to the fourth possible implementation, in a fifth possible implementation, the processor is further configured to: before the transceiver receives the uplink reference signal, determine a to-be-measured neighboring cell according to information about a distance between the UE and a base station to which a neighboring cell belongs.

According to a fourth aspect, a computer-readable medium is provided, including a computer-executable instruction, where when a central processing unit of a computer executes the computer-executable instruction, the computer executes the method according to the first aspect.

The embodiments of the present invention provide a coordinated multi-point CoMP user determining method and device. When a UE cannot measure a downlink reference signal power value of a neighboring cell, a base station acquires a first uplink reference signal power value of the neighboring cell of the UE and a second uplink reference signal power value of a serving cell, and finally determines, according to the first uplink reference signal power value and the first uplink reference signal power value, that the UE is a CoMP user. In this way, system performance is thereby enhanced.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a CoMP user determining method according to an embodiment of the present invention;
FIG. 2A and FIG. 2B are a schematic flowchart of a CoMP user determining method according to an embodiment of the present invention;
FIG. 3 is a schematic structural diagram of a base station according to an embodiment of the present invention;
FIG. 4 is a schematic structural diagram of another base station according to an embodiment of the present invention;
FIG. 5 is a schematic apparatus diagram of a base station according to an embodiment of the present invention; and
FIG. 6 is a schematic apparatus diagram of another base station according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

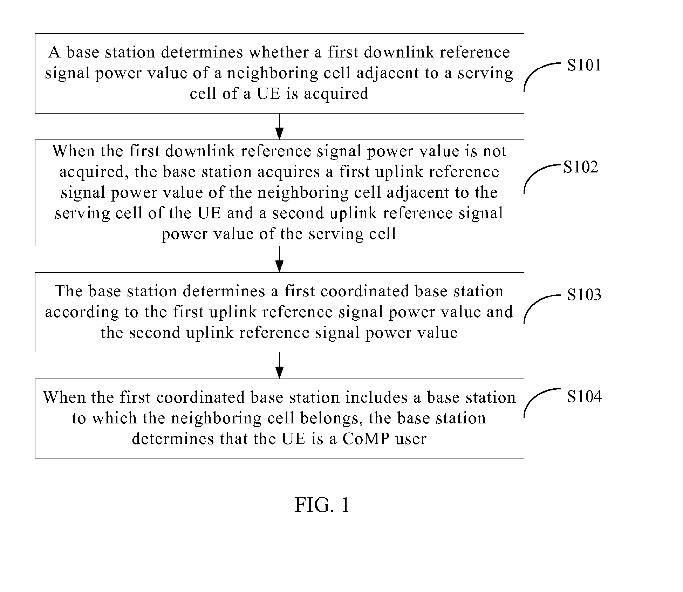

An embodiment of the present invention provides a CoMP user determining method, and as shown in FIG. 1, the method is executed by a base station and includes:
S101: Abase station determines whether a first downlink reference signal power value of a neighboring cell adjacent to a serving cell of a UE is acquired.
S102: When the first downlink reference signal power value is not acquired, the base station acquires a first uplink reference signal power value of the neighboring cell adjacent to the serving cell of the UE and a second uplink reference signal power value of the serving cell.

The first uplink reference signal power value and the second uplink reference signal power value that is of the serving cell may be an uplink RSRP in an LTE (Long Term Evolution, Long Term Evolution) system, or may be an uplink RSCP (Received Signal Code Power, received signal code power) in a UMTS (Universal Mobile Telecommunications System, Universal Mobile Telecommunications System) system, which is not limited in the present invention.

Further, before the base station acquires the first uplink reference signal power and the second uplink reference signal power, the base station receives an uplink reference signal. The step in which the base station acquires the first uplink reference signal power value and the second uplink reference signal power value may be specifically that: the base station measures, in the serving cell, a receive power of the uplink reference signal sent by the UE, to obtain the second uplink reference signal power value, and acquires a receive power that is of the uplink reference signal sent by the UE and that is measured in the neighboring cell by a base station to which the neighboring cell belongs, to obtain the first uplink reference signal power value.

The uplink reference signal may be an SRS (Sounding Reference Signal, sounding reference signal) or a DMRS (Demodulation Reference Signal, demodulation reference signal), which is not limited in the present invention.
S103: The base station determines a first coordinated base station according to the first uplink reference signal power value and the second uplink reference signal power value.

Specifically, the base station derives, from a difference between the first uplink reference signal power value and the second uplink reference signal power value, a difference between a second uplink path loss value in the direction of from the UE to the serving cell and a first uplink path loss value in the direction of from the UE to the neighboring cell, and determines the first coordinated base station according to the difference between the second uplink path loss value and the first uplink path loss value.

It should be noted that the first uplink path loss value is a difference between an uplink reference signal transmit power value of the UE and the first uplink reference signal power value, and the second uplink path loss value is a difference between the uplink reference signal transmit power value of the UE and the first uplink reference signal power value. It can be learned that the difference between the first uplink reference signal power value and the second uplink signal power value is a difference between the second uplink path loss value and the first uplink path loss value.

Further, when the difference between the second uplink path loss value and the first uplink path loss value is greater than or equal to a preset threshold, it is concluded that the base station to which the neighboring cell belongs is the first coordinated base station.

Optionally, before the uplink reference signal is received, the base station determines a to-be-measured neighboring cell according to information about a distance between the UE and a base station to which a neighboring cell belongs, and obtains the first uplink reference signal power value that is derived, by a base station to which the to-be-measured neighboring cell belongs, from measurement of the uplink reference signal sent by the UE.

Specifically, the determining a to-be-measured neighboring cell according to information about a distance between the UE of the serving cell and a base station to which a neighboring cell belongs includes the following three cases:
Case 1: When the information about a distance between the UE and a base station to which a neighboring cell belongs is not acquired, determine that the neighboring cell of the UE is the to-be-measured neighboring cell.
Case 2: When the information about a distance between the UE and a base station to which a neighboring cell belongs is acquired, and the distance information is less than or equal to a distance limit value, determine that the neighboring cell is the to-be-measured neighboring cell.
Case 3: When the information about a distance between the UE and a base station to which a neighboring cell belongs is acquired, and the distance information is greater than a distance limit value, determine that the neighboring cell is not the to-be-measured neighboring cell.

For the foregoing case 2, when the distance information is less than or equal to the distance limit value, in other words, the UE is in close proximity to the neighboring cell, the base station needs to acquire only an uplink reference signal power value of the to-be-measured neighboring cell, thereby reducing measurement complexity and workload of the base station.
S104: When the first coordinated base station includes the base station to which the neighboring cell belongs, the base station determines that the UE is a CoMP user.

It should be noted that the UE may measure and report the first downlink reference signal power value of the neighboring cell. However, in real circumstances, due to a limited measurement capability of the UE, for example, when the UE is at a far distance from the neighboring cell or the neighboring cell transmits a downlink reference signal at a relatively low transmit power, the UE cannot measure the first downlink reference signal power value of the neighboring cell, and thereby it cannot be determined whether the UE is a CoMP user. By practicing the foregoing steps S101 to S104, the UE can be determined to be a CoMP user.

Further to the above, measuring the uplink reference signal of the neighboring cell increases the workload of the base station and consequently reduces service quality of that base station; measurement accuracy of the uplink reference signal is limited. For the above reasons, a downlink reference signal power value still needs to be acquired. Preferably, when the first downlink reference signal power value of the neighboring cell of the UE can be acquired, the base station determines, by using the first downlink reference signal power value, whether the UE is a CoMP user, specifically including that: when the base station acquires the first downlink reference signal power value, the base station acquires a second downlink reference signal power value of the serving cell of the UE, determines a second coordinated base station according to the first downlink reference signal power value and the second downlink reference signal power value, and when the second coordinated base station includes the base station to which the neighboring cell belongs, determines that the UE is a CoMP user.

Specifically, the UE obtains the first downlink reference signal power value of the neighboring cell and the second downlink reference signal power value of the serving cell by measurement; when a difference between the first downlink reference signal power value and the second downlink reference signal power value is greater than or equal to a preset limit value, the UE reports the first downlink reference signal power value and the second downlink reference signal power value to the base station; and when the difference between the first downlink reference signal power value and the second downlink reference signal power value is greater than or equal to a preset threshold, the base station determines that the base station to which the neighboring cell belongs is a coordinated base station that transmits data to the UE. The base station obtains a first downlink path loss value according to a difference between a signal transmit power value of the base station to which the neighboring cell belongs and the first downlink reference signal power value that are acquired; obtains a second downlink path loss value according to a difference between a signal transmit power value of the base station and the second downlink reference signal power value; and obtains a difference between the second downlink path loss value and the first downlink path loss value, so as to determine, when the difference between the second downlink path loss value and the first downlink path loss value is greater than or equal to a preset threshold, that the base station to which the neighboring cell belongs is a coordinated base station that receives data sent by the UE. The coordinated base station that transmits data to the UE and the coordinated base station that receives data sent by the UE are second coordinated base stations, and the UE is determined to be a CoMP user.

It should be noted that the preset limit value and the preset threshold may be different values.

In the foregoing solutions, when a UE cannot measure a downlink reference signal power value of a neighboring cell, a base station acquires a first uplink reference signal power value of the neighboring cell of the UE and a second uplink reference signal power value of a serving cell, and finally determines, according to the first uplink reference signal power value and the first uplink reference signal power value, that the UE is a CoMP user. In this way, system performance is thereby enhanced.

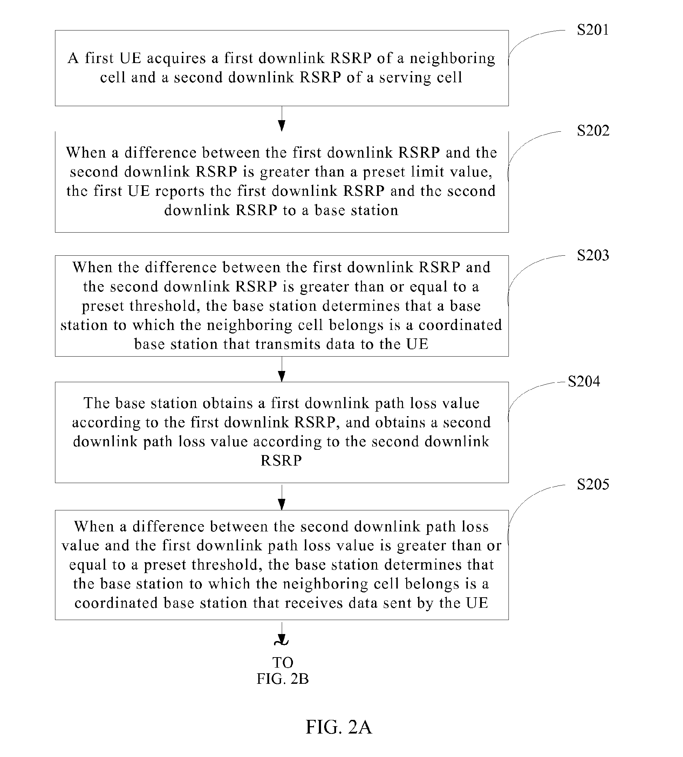

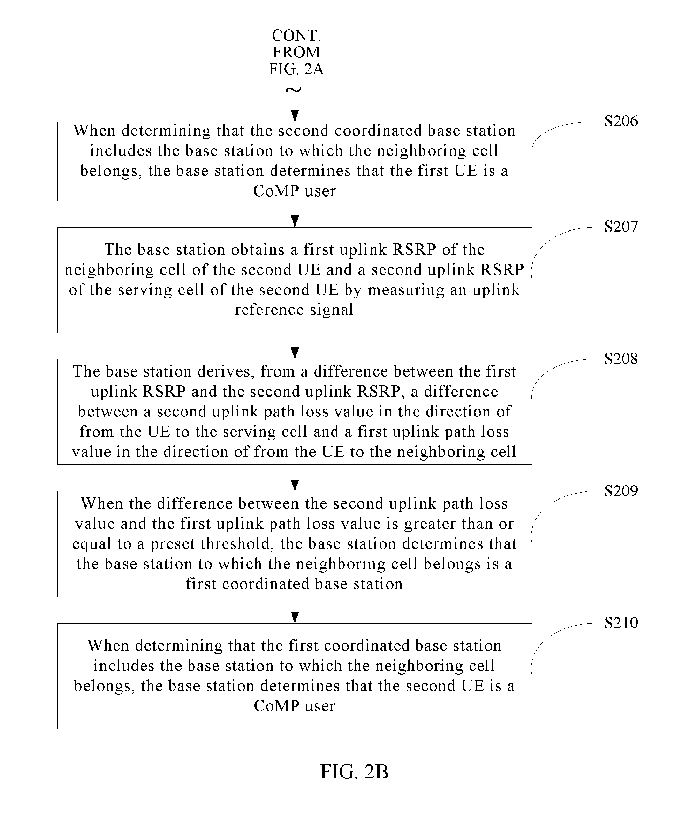

An embodiment of the present invention provides a CoMP user determining method. As shown in FIG. 2A and FIG. 2B, in this embodiment of the present invention, an uplink reference signal power value and a downlink reference signal power value are RSRPs by way of example, and the method includes:

It should be noted that, in this embodiment, a first UE and a second UE are within a serving cell of a base station, where the first UE can measure a downlink RSRP of a neighboring cell adjacent to the serving cell, and the second UE cannot measure the downlink RSRP of the neighboring cell.
S201: A first UE acquires a first downlink RSRP of the neighboring cell and a second downlink RSRP of the serving cell.
S202: When a difference between the first downlink RSRP and the second downlink RSRP is greater than a preset limit value, the first UE reports the first downlink RSRP and the second downlink RSRP to the base station.

Specifically, a reporting event is configured on the UE, and when the difference between the first downlink RSRP and the second downlink RSRP is greater than the preset limit value, the UE reports the first downlink RSRP and the second downlink RSRP to the base station.
S203: When the difference between the first downlink RSRP and the second downlink RSRP is greater than or equal to a preset threshold, the base station determines that a base station to which the neighboring cell belongs is a coordinated base station that transmits data to the UE.
S204: The base station obtains a first downlink path loss value according to the first downlink RSRP, and obtains a second downlink path loss value according to the second downlink RSRP.

Specifically, the base station obtains the first downlink path loss value according to a difference between a signal transmit power value of the base station to which the neighboring cell belongs and the first downlink RSRP that are acquired, and obtains the second downlink path loss value according to a difference between a signal transmit power value of the base station and the second downlink RSRP.
S205: When a difference between the second downlink path loss value and the first downlink path loss value is greater than or equal to a preset threshold, the base station determines that the base station to which the neighboring cell belongs is a coordinated base station that receives data sent by the UE.

The coordinated base station that transmits data to the UE and the coordinated base station that receives data sent by the UE are second coordinated base stations.
S206: When determining that the second coordinated base station includes the base station to which the neighboring cell belongs, the base station determines that the first UE is a CoMP user.

Further, the second UE cannot measure the downlink RSRP of the neighboring cell; therefore, for the second UE, steps S207 to S210 are performed.
S207: The base station obtains a first uplink RSRP of the neighboring cell of the second UE and a second uplink RSRP of the serving cell of the second UE by measuring an uplink reference signal.

Specifically, before the base station acquires the first uplink reference signal power and the second uplink reference signal power, the base station receives the uplink reference signal, and the base station measures, in the serving cell, a receive power of the uplink reference signal sent by the UE to obtain the second uplink reference signal power value, and acquires a receive power that is of the uplink reference signal sent by the UE and that is measured in the neighboring cell by the base station to which the neighboring cell belongs, to obtain the first uplink reference signal power value.

The uplink reference signal may be an SRS or a DMRS, which is not limited in the present invention.
S208: The base station derives, from a difference between the first uplink RSRP and the second uplink RSRP, a difference between a second uplink path loss value in the direction of from the UE to the serving cell and a first uplink path loss value in the direction of from the UE to the neighboring cell.

It should be noted that the first uplink path loss value is a difference between an uplink reference signal transmit power value of the UE and the first uplink reference signal power value, and the second uplink path loss value is a difference between the uplink reference signal transmit power value of the UE and the first uplink reference signal power value. It can be learned that the difference between the first uplink reference signal power value and the second uplink signal power value is the difference between the second uplink path loss value and the first uplink path loss value.
S209: When the difference between the second uplink path loss value and the first uplink path loss value is greater than or equal to a preset threshold, the base station determines that the base station to which the neighboring cell belongs is a first coordinated base station.

Optionally, before the uplink reference signal is received, the base station determines a to-be-measured neighboring cell according to information about a distance between the UE and a base station to which a neighboring cell belongs, and obtains the first uplink reference signal power value that is derived, by a base station to which the to-be-measured neighboring cell belongs, from measurement of the uplink reference signal sent by the UE.

Specifically, the determining a to-be-measured neighboring cell according to information about a distance between the UE of the serving cell and a base station to which a neighboring cell belongs includes the following three cases:
Case 1: When the information about a distance between the UE and a base station to which a neighboring cell belongs is not acquired, determine that the neighboring cell of the UE is the to-be-measured neighboring cell.
Case 2: When the information about a distance between the UE and a base station to which a neighboring cell belongs is acquired, and the distance information is less than or equal to a distance limit value, determine that the neighboring cell is the to-be-measured neighboring cell.
Case 3: When the information about a distance between the UE and a base station to which a neighboring cell belongs is acquired, and the distance information is greater than a distance limit value, determine that the neighboring cell is not the to-be-measured neighboring cell.

For the foregoing case 2, when the distance information is less than or equal to the distance limit value, in other words, the UE is in close proximity to the neighboring cell, the base station needs to acquire only an uplink reference signal power value of the to-be-measured neighboring cell, thereby reducing measurement complexity and a workload of the base station.
S210: When determining that the first coordinated base station includes the base station to which the neighboring cell belongs, the base station determines that the second UE is a CoMP user.

It should be noted that, for brief description, the foregoing method embodiments are represented as a series of actions. However, a person skilled in the art should appreciate that the present invention is not limited to the described order of the actions. In addition, a person skilled in the art should also understand that all the embodiments described in this specification belong to exemplary embodiments, and the involved actions and modules are not necessarily mandatory to the present invention.

In the foregoing solutions, when a UE can measure a downlink reference signal power value of a neighboring cell, a CoMP user is determined according to the downlink reference signal power value; when the UE cannot measure a downlink RSRP, a base station acquires a first uplink reference signal power value of the neighboring cell adjacent to a serving cell of the UE and a second uplink reference signal power value of the serving cell, and finally determines, according to the first uplink reference signal power value and the second uplink reference signal power value, that the UE is a CoMP user. In this way, a CoMP user is determined according to the uplink reference signal power value and the downlink reference signal power value that are acquired, CoMP user determination may be made for all UEs in the serving cell of the base station, thereby further improving system performance.

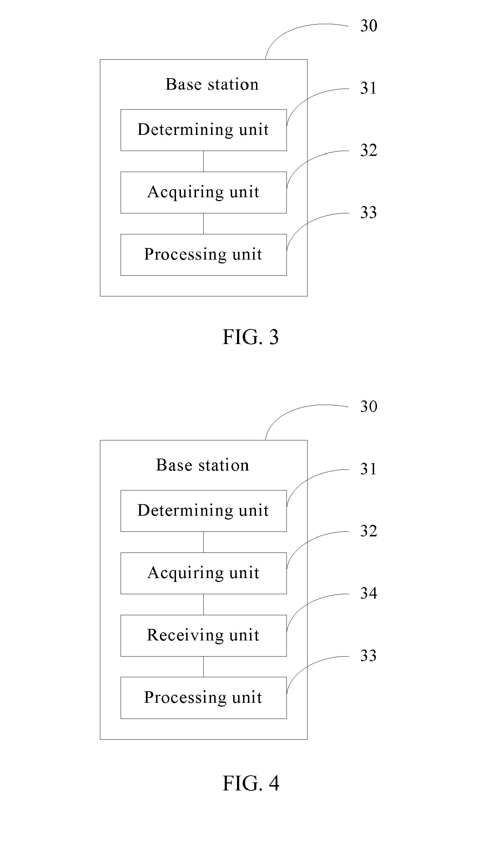

An embodiment of the present invention provides a base station 30, and as shown in FIG. 3, the base station 30 includes:
a determining unit 31, configured to determine whether a first downlink reference signal power value of a neighboring cell adjacent to a serving cell of a UE is acquired;
an acquiring unit 32, configured to: when the determining unit 31 determines that the first downlink reference signal power value is not acquired, acquire a first uplink reference signal power value of the neighboring cell adjacent to the serving cell of the UE and a second uplink reference signal power value of the serving cell, where
the first uplink reference signal power value and the second uplink reference signal power value that is of the serving cell may be uplink RSRP in an LTE system, or may be uplink RSCP in a UMTS system, which is not limited in the present invention; and
a processing unit 33, configured to determine a first coordinated base station according to the first uplink reference signal power value and the second uplink reference signal power value that are acquired by the acquiring unit 32, and when the first coordinated base station includes a base station to which the neighboring cell belongs, determine that the UE is a CoMP user.

Optionally, the processing unit 33 is specifically configured to: derive, from a difference between the first uplink reference signal power value and the second uplink reference signal power value, a difference between a second uplink path loss value in the direction of from the UE to the serving cell and a first uplink path loss value in the direction of from the UE to the neighboring cell, and determine the first coordinated base station according to the difference between the second uplink path loss value and the first uplink path loss value.

It should be noted that the first uplink path loss value is a difference between an uplink reference signal transmit power value of the UE and the first uplink reference signal power value, and the second uplink path loss value is a difference between the uplink reference signal transmit power value of the UE and the first uplink reference signal power value. It can be learned that the difference between the first uplink reference signal power value and the second uplink reference signal power value is the difference between the second uplink path loss value and the first uplink path loss value.

The processing unit 33 is specifically configured to: when the difference between the second uplink path loss value and the first uplink path loss value is greater than or equal to a preset threshold, determine that the base station to which the neighboring cell belongs is the first coordinated base station.

Further, as shown in FIG. 4, the base station 30 further includes: a receiving unit 34, configured to: before the first uplink reference signal power value of the neighboring cell of the UE and the second uplink reference signal power value of the serving cell are acquired, receive an uplink reference signal.

The processing unit 33 is specifically configured to: measure, in the serving cell, a receive power of the uplink reference signal of the UE to obtain the second uplink reference signal power value, and acquire a receive power that is of the uplink reference signal of the UE and that is measured in the neighboring cell by the base station to which the neighboring cell belongs, to obtain the first uplink reference signal power value.

The uplink reference signal may be an SRS or a DMRS, which is not limited in the present invention.

Further, the determining unit 31 is further configured to: before the receiving unit 34 receives the uplink reference signal, determine a to-be-measured neighboring cell according to information about a distance between the UE and a base station to which a neighboring cell belongs.

Further, the acquiring unit 32 is further configured to: when the determining unit 31 determines that the first downlink reference signal power value of the neighboring cell of the UE is acquired, acquire a second downlink reference signal power value of the serving cell of the UE.

The processing unit 33 is further configured to: determine a second coordinated base station according to the first downlink reference signal power value and the second downlink reference signal power value that are acquired by the acquiring unit 32, and when the second coordinated base station includes the base station to which the neighboring cell belongs, determine that the UE is a CoMP user.

When a UE cannot measure a downlink reference signal power value of a neighboring cell, the base station acquires a first uplink reference signal power value of the neighboring cell adjacent to a serving cell of the UE and a second uplink reference signal power value of the serving cell, and finally determines, according to the first uplink reference signal power value and the first uplink reference signal power value, that the UE is a CoMP user. In this way, system performance is thereby enhanced.

A person skilled in the art may clearly understand that, for the purpose of convenient and brief description, for a detailed working process and description of the foregoing base station, reference may be made to a corresponding process in the foregoing method embodiments, and details are not described herein again.

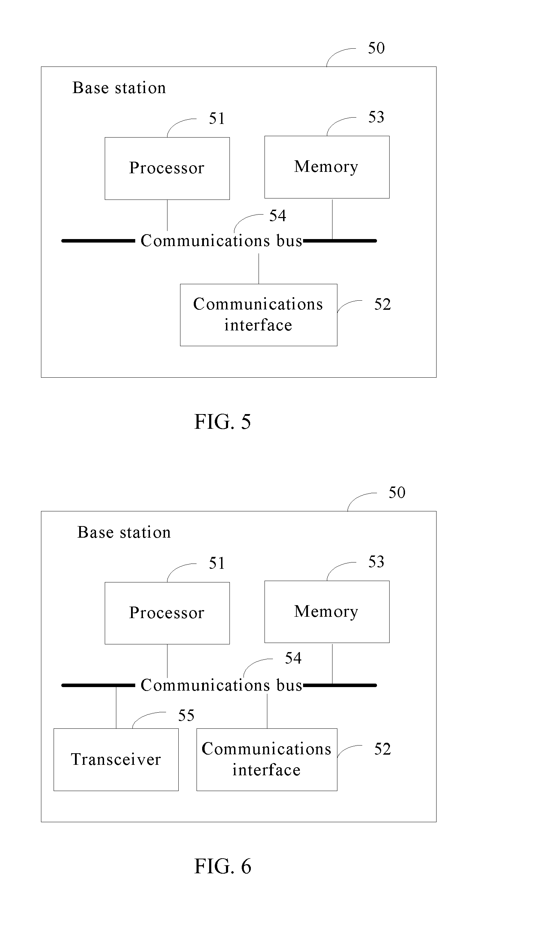

An embodiment of the present invention provides a base station 50, and as shown in FIG. 5, the base station 50 includes:
a processor (processor) 51, a communications interface (Communications Interface) 52, a memory (memory) 53, and a communications bus 54, where the processor 51, the communications interface 52, and the memory 53 communicate with each other by using the communications bus 54.

The processor 51 may be a central processing unit CPU or an application-specific integrated circuit ASIC (Application Specific Integrated Circuit), or may be configured to one or more integrated circuits that implement the embodiments of the present invention.

The memory 53 is configured to store program code, where the program code includes a computer operation instruction. The memory 53 may include a high speed RAM memory, or may include a non-volatile memory (non-volatile memory), for example, at least one magnetic disk memory.

The communications interface 52 is configured to implement connection and communication between these apparatuses.

The processor 51 executes the program code, and is configured to: determine whether a first downlink reference signal power value of a neighboring cell adjacent to a serving cell of a UE is acquired; when it is determined that the first downlink reference signal power value is not acquired, acquire a first uplink reference signal power value of the neighboring cell adjacent to the serving cell of the UE and a second uplink reference signal power value of the serving cell; determine a first coordinated base station according to the first uplink reference signal power value and the second uplink reference signal power value that are acquired; and when the first coordinated base station includes a base station to which the neighboring cell belongs, determine that the UE is a CoMP user.

Optionally, the processor 51 is specifically configured to: when it is determined that the first downlink reference signal power value of the neighboring cell of the UE is acquired, acquire a second downlink reference signal power value of the serving cell of the UE, and determine a second coordinated base station according to the first downlink reference signal power value and the second downlink reference signal power value, and when the second coordinated base station includes the base station to which the neighboring cell belongs, determine that the UE is a CoMP user.

Optionally, the processor 51 is specifically configured to: derive, from a difference between the first uplink reference signal power value and the second uplink reference signal power value, a difference between a second uplink path loss value in the direction of from the UE to the serving cell and a first uplink path loss value in the direction of from the UE to the neighboring cell, and determine the first coordinated base station according to the difference between the second uplink path loss value and the first uplink path loss value.

Optionally, the processor 51 is specifically configured to: when the difference between the second uplink path loss value and the first uplink path loss value is greater than or equal to a preset threshold, determine that the base station to which the neighboring cell belongs is the first coordinated base station.

Further, as shown in FIG. 6, the base station 50 further includes a transceiver 55, where the transceiver and the processor are connected by using the communications bus, and the transceiver 55 is configured to: before the first uplink reference signal power value of the neighboring cell of the UE and the second uplink reference signal power value of the serving cell are acquired, receive an uplink reference signal.

The processor 51 is specifically configured to: measure, in the serving cell, a receive power of the uplink reference signal that is of the UE and received by the transceiver 55, to obtain the second uplink reference signal power value, and acquire a receive power that is of the uplink reference signal of the UE and that is measured in the neighboring cell by the base station to which the neighboring cell belongs, to obtain the first uplink reference signal power value.

Optionally, the processor 51 is further configured to: before the transceiver 55 receives the uplink reference signal, determine a to-be-measured neighboring cell according to information about a distance between the UE and a base station to which a neighboring cell belongs.

An embodiment of the present invention provides a computer-readable medium, including a computer-executable instruction. When a central processing unit of a computer executes the computer-executable instruction, the computer executes the program code that is executed by the processor 51 of the base station described in the foregoing FIG. 5 or FIG. 6.

A person of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A coordinated multi-point CoMP user determining method, comprising:
Determining, by a base station, whether a first downlink reference signal power value of a neighboring cell adjacent to a serving cell of a user equipment UE is acquired;
when the first downlink reference signal power value is not acquired, acquiring a first uplink reference signal power value of the neighboring cell adjacent to the serving cell of the UE and a second uplink reference signal power value of the serving cell;
determining a first coordinated base station according to the first uplink reference signal power value and the second uplink reference signal power value; and
when the first coordinated base station comprises a base station to which the neighboring cell belongs, determining that the UE is a CoMP user.

2. The method according to claim 1, wherein the method further comprises: when the first downlink reference signal power value is acquired, acquiring, by the base station, a second downlink reference signal power value of the serving cell of the UE;
determining a second coordinated base station according to the first downlink reference signal power value and the second downlink reference signal power value; and
when the second coordinated base station comprises the base station to which the neighboring cell belongs, determining that the UE is a CoMP user.

3. The method according to claim 1 or 2, wherein the determining a first coordinated base station according to the first uplink reference signal power value and the second uplink reference signal power value comprises:
deriving, from a difference between the first uplink reference signal power value and the second uplink reference signal power value, a difference between a second uplink path loss value in the direction of from the UE to the serving cell and a first uplink path loss value in the direction of from the UE to the neighboring cell; and
determining the first coordinated base station according to the difference between the second uplink path loss value and the first uplink path loss value.

4. The method according to claim 3, wherein the determining the first coordinated base station according to the difference between the second uplink path loss value and the first uplink path loss value comprises:
when the difference between the second uplink path loss value and the first uplink path loss value is greater than or equal to a preset threshold, determining that the base station to which the neighboring cell belongs is the first coordinated base station.

5. The method according to any one of claims 1 to 4, wherein before the acquiring a first uplink reference signal power value of the neighboring cell of the UE and a second uplink reference signal power value of the serving cell of the UE, the method further comprises:
receiving an uplink reference signal; wherein
the acquiring a first uplink reference signal power value of the neighboring cell of the UE and a second uplink reference signal power value of the serving cell of the UE comprises:
measuring, in the serving cell, a receive power of the uplink reference signal of the UE to obtain the second uplink reference signal power value, and acquiring a receive power that is of the uplink reference signal of the UE and that is measured in the neighboring cell by the base station to which the neighboring cell belongs, to obtain the first uplink reference signal power value.

6. The method according to claim 5, wherein before the receiving an uplink reference signal, the method further comprises:
determining a to-be-measured neighboring cell according to information about a distance between the UE and a base station to which a neighboring cell belongs.

7. Abase station, comprising:
a determining unit, configured to determine whether a first downlink reference signal power value of a neighboring cell adjacent to a serving cell of a UE is acquired;
an acquiring unit, configured to: when the determining unit determines that the first downlink reference signal power value is not acquired, acquire a first uplink reference signal power value of the neighboring cell adjacent to the serving cell of the UE and a second uplink reference signal power value of the serving cell; and
a processing unit, configured to: determine a first coordinated base station according to the first uplink reference signal power value and the second uplink reference signal power value that are acquired by the acquiring unit, and when the first coordinated base station comprises a base station to which the neighboring cell belongs, determine that the UE is a CoMP user.

8. The base station according to claim 7, wherein the acquiring unit is further configured to: when the determining unit determines that the first downlink reference signal power value of the neighboring cell of the UE is acquired, acquire a second downlink reference signal power value of the serving cell of the UE; and
the processing unit is further configured to: determine a second coordinated base station according to the first downlink reference signal power value and the second downlink reference signal power value that are acquired by the acquiring unit, and when the second coordinated base station comprises a base station to which the neighboring cell belongs, determine that the UE is a CoMP user.

9. The base station according to claim 7 or 8, wherein the processing unit is specifically configured to: derive, from a difference between the first uplink reference signal power value and the second uplink reference signal power value, a difference between a second uplink path loss value in the direction of from the UE to the serving cell and a first uplink path loss value in the direction of from the UE to the neighboring cell; and
determine the first coordinated base station according to the difference between the second uplink path loss value and the first uplink path loss value.

10. The base station according to claim 9, wherein the processing unit is specifically configured to: when the difference between the second uplink path loss value and the first uplink path loss value is greater than or equal to a preset threshold, determine that the base station to which the neighboring cell belongs is the first coordinated base station.

11. The base station according to any one of claims 7 to 10, wherein the base station further comprises: a receiving unit, configured to: before the first uplink reference signal power value of the neighboring cell of the UE and the second uplink reference signal power value of the serving cell are acquired, receive an uplink reference signal; and
the processing unit is specifically configured to: measure, in the serving cell, a receive power of the uplink reference signal of the UE to obtain the second uplink reference signal power value, and acquire a receive power that is of the uplink reference signal of the UE and that is measured in the neighboring cell by the base station to which the neighboring cell belongs, to obtain the first uplink reference signal power value.

12. The base station according to claim 11, wherein the determining unit is further configured to: before the receiving unit receives the uplink reference signal, determine a to-be-measured neighboring cell according to information about a distance between the UE and a base station to which a neighboring cell belongs.

13. A base station, comprising: a processor and a memory, wherein the memory stores a computer-executable instruction, and the processor and the memory are connected by using a communications bus; and
when the base station operates, the processor executes the computer-executable instruction stored in the memory, and is configured to: determine whether a first downlink reference signal power value of a neighboring cell adjacent to a serving cell of a UE is acquired; when it is determined that the first downlink reference signal power value is not acquired, acquire a first uplink reference signal power value of the neighboring cell adjacent to the serving cell of the UE and a second uplink reference signal power value of the serving cell; determine a first coordinated base station according to the first uplink reference signal power value and the second uplink reference signal power value that are acquired; and when the first coordinated base station comprises a base station to which the neighboring cell belongs, determine that the UE is a CoMP user.

14. The base station according to claim 13, wherein the processor is specifically configured to: when it is determined that the first downlink reference signal power value of the neighboring cell of the UE is acquired, acquire a second downlink reference signal power value of the serving cell of the UE, and determine a second coordinated base station according to the first downlink reference signal power value and the second downlink reference signal power value, and when the second coordinated base station comprises the base station to which the neighboring cell belongs, determine that the UE is a CoMP user.

15. The base station according to claim 13 or 14, wherein the processor is specifically configured to: derive, from a difference between the first uplink reference signal power value and the second uplink reference signal power value, a difference between a second uplink path loss value in the direction of from the UE to the serving cell and a first uplink path loss value in the direction of from the UE to the neighboring cell, and determine the first coordinated base station according to the difference between the second uplink path loss value and the first uplink path loss value.

16. The base station according to claim 15, wherein the processor is specifically configured to: when the difference between the second uplink path loss value and the first uplink path loss value is greater than or equal to a preset threshold, determine that the base station to which the neighboring cell belongs is the first coordinated base station.

17. The base station according to any one of claims 13 to 16, wherein the base station further comprises a transceiver, and the transceiver and the processor are connected by the communications bus; and the transceiver is configured to: before the first uplink reference signal power value of the neighboring cell of the UE and the second uplink reference signal power value of the serving cell are acquired, receive an uplink reference signal; and
the processor is specifically configured to: measure, in the serving cell, a receive power of the uplink reference signal that is of the UE and received by the transceiver, to obtain the second uplink reference signal power value, and acquire a receive power that is of the uplink reference signal of the UE and that is measured in the neighboring cell by the base station to which the neighboring cell belongs, to obtain the first uplink reference signal power value.

18. The base station according to claim 17, wherein the processor is further configured to: before the transceiver receives the uplink reference signal, determine a to-be-measured neighboring cell according to information about a distance between the UE and a base station to which a neighboring cell belongs.

19. A computer-readable medium, comprising a computer-executable instruction, wherein when a central processing unit of a computer executes the computer-executable instruction, the computer executes the method according to any one of claims 1 to 6.
